# EUROPÄISCHE PATENTSCHRIFT

(11) **EP 1 066 938 B1**
(45) Veröffentlichungstag und Bekanntmachung des Hinweises auf die Patenterteilung: **06.10.2004**
(21) Anmeldenummer: 00114029.2
(22) Anmeldetag: 05.07.2000
(51) Int. Cl.: B29B 9/06, B65H 51/16, B65H 57/04

(54) **Vorrichtung zum Granulieren von Kunststoffsträngen**
Apparatus for granulating rods of plastic
Dispositif pour granuler de cordons plastiques

(30) Priorität: 06.07.1999 DE 19931222
(43) Veröffentlichungstag der Anmeldung: 10.01.2001
(73) Patentinhaber: RIETER AUTOMATIK GmbH, D-63762 Grossostheim (DE)
(72) Erfinder: Clauss, Michael, 65719 Hofheim (DE); Nissen, Dirk, 60599 Frankfurt (DE); Scheurich, Jochen, 63483 Niedernberg (DE); Steinbacher, Werner, 63867 Johannesberg (DE); Zahn, Rainer, 63762 Grossostheim (DE); Schuler, Michael, 63762 Grossostheim (DE)
(74) Vertreter: Bardehle, Heinz, Dipl.-Ing.

(56) Entgegenhaltungen:
- US-A- 5 118 270
- US-A- 5 182 115
- US-A- 5 310 515
- US-A- 5 628 947
- US-A- 5 787 604
- US-A- 5 888 554

## Beschreibung

Die Erfindung bezieht sich auf eine Vorrichtung zum Granulieren von schmelzflüssig aus Düsen austretenden Strängen aus Kunststoff mit einem Granulator, bei der zwischen den Düsen und dem Granulator eine einen Kühlflüssigkeitsstrom führende Kühlstrecke und eine Entwässerungsstrecke vorgesehen sind.

Eine derartige Vorrichtung ist aus der DE OS 197 28 661 bekannt. Bei dieser Vorrichtung, wie auch bei anderen gleichartig gestalteten Vorrichtungen, ergibt sich das Problem einer sicheren Führung der Stränge am Ende der Entwässerungsstrecke zu dem Eingang des Granulators, insbesondere, wenn in der Entwässerungsstrecke ein umlaufendes Förderband vorgesehen ist. Besonders ausgeprägt ist dieses Problem, wenn es sich um auch im Endzustand der Stränge weich bleibende Materialien handelt. Wenn dabei der Transport der Stränge lediglich aufgrund eines Schubes erfolgt, dann neigen die Stränge zu einem Schlängeln, was dann zu ungleichmäßig geschnittenem Granulat führt.

Weiterhin sei auf die US-PS 5,628,947 verwiesen, in der eine Vorrichtung gemäß den obigen Angaben offenbart ist, bei der in dem Boden der Entwässerungsstrecke schräg aufwärts verlaufende Schlitzdüsen gebildet sind, durch die ein Luftstrom auf die in der Entwässerungsstrecke geführten Stränge gerichtet ist. Aufgrund der Schräglage der Schlitzdüsen wird dem von ihnen geleiteten Luftstrom die Tendenz gegeben, fördernd auf die Kunststoffstränge zu wirken. Die Schlitzdüsen haben vor allem die Aufgabe, die Kunststoffstränge vom Boden der Entwässerungsstrecke abzuheben, so dass die Kunststoffstränge weitgehend reibungsfrei geführt werden. Dieser vorherrschende Effekt erfordert es, die Schlitzdüsen so zu gestalten, dass diese hauptsächlich eine Kraft auf die Kunststoffstränge ausüben, deren wesentliche Komponente senkrecht zu den Kunststoffsträngen verläuft, so dass, wenn überhaupt, nur eine beschränkte Förderwirkung auf die Kunststoffstränge durch die schräg aufwärts verlaufenden Schlitzdüsen ausgeübt werden kann. Bei dieser bekannten Vorrichtung ist der Granulator direkt an die Entwässerungsstrecke angeschlossen.

Der Erfindung liegt die Aufgabe zugrunde, die Führung der Stränge im Bereich vor dem Granulator zu verbessern. Erfindungsgemäß geschieht dies dadurch, dass dem Granulator eine sich an die Entwässerungsstrecke anschließende Einlaufauflage vorgeordnet ist, die mit mindestens einer quer zur Laufrichtung der Stränge angeordneten, als Stufe mit vertikal nach unten gerichtetem Niveauunterschied in der Einlaufauflage ausgebildeten Luftdüsenanordnung zur Erzeugung eines aus der Stufe im Wesentlichen parallel zur Laufrichtung der Stränge austretenden Luftstromes vorgesehen ist, der die der Einlaufauflage zugeführten Stränge mitreißt. Aufgrund der als Stufe ausgebildeten Luftdüsenanordnung im Bereich der Einlaufauflage ergibt sich zwangsläufig eine Luftströmung, die parallel zu der Einlaufauflage hinter der Stufe verläuft, so daß die über die Stufe auf diesen Bereich auftreffenden Stränge stets und nur in Richtung der Einlaufauflage gefördert und daher von dem Luftstrom mitgerissen werden, so daß für die Stränge keine besondere Verweilzeit auf der Einlaufauflage existiert und die Stränge daher gleichmäßig, so wie sie von der Entwässerungsstrecke angeliefert werden, dem Granulator zugeführt werden. Dabei spielt die Stufe in der Einlaufauflage für die Ausbildung der Luftdüsenanordnung die wesentliche Rolle, da durch die Stufe einerseits nur eine geringe Ablenkung der Stränge von ihrer geraden Ausrichtung erfolgt und andererseits die Stufe eine günstige Ausgangsrichtung für die Luftdüsenanordnung bietet, da der von der Luftdüsenanordnung gelieferte Luftstrom praktisch senkrecht aus der Stufe austritt und danach im weiteren Verlauf der Einlaufauflage folgt.

Die Luftdüsenanordnung in der Stufe kann man zweckmäßig als Schlitzdüse ausbilden. Diese erstreckt sich dann quer über die Breite der Einlaufauflage. Es ist aber auch möglich, die Luftdüsenanordnung als eine Reihe von in der Stufe nebeneinander angeordneten Einzeldüsen zu gestalten, was aus fertigungstechnischen Gründen für die Bildung der Stufe günstig ist. Außerdem ergibt sich durch die Wahl eines günstigen Durchmessers der Düsen eine besonders hohe Stromgeschwindigkeit für den Luftstrom.

Um die Einwirkung auf die von der Einlaufauflage getragenen Stränge zu erhöhen, kann man oberhalb der Einlaufauflage weitere in Laufrichtung der Stränge gerichtete Luftdüsen vorsehen.

Die Einlaufauflage läßt sich abnehmbar zwischen der Entwässerungsstrecke und dem Granulator gestalten. In diesem Fall ergibt sich bei Abnahme der Einlaufauflage ein Freiraum zwischen Entwässerungsstrecke und Granulator und damit eine besonders gute Zugänglichkeit des Granulators, was insbesondere bei Reparaturen oder Reinigung des Granulators von Vorteil ist.

Die Abnahme der Einlaufauflage kann man unterschiedlich gestalten. So ist es möglich, die Einlaufauflage ausschwenkbar anzuordnen. Man kann die Einlaufauflage aber auch ausschiebbar gestalten.

Ausführungsbeispiele der Erfindung sind in den Figuren dargestellt. Es zeigen:
- Figur 1: die Vorrichtung in perspektivischer Sicht zusammen mit dem Ende der Entwässerungsstrecke und dem Granulator,
- Figur 2: in prinzipieller Darstellung einen Längsschnitt durch die Anordnung gemäß Figur 1,
- Figur 3: eine im Schnitt dargestellte Abwandlung mit oberhalb der Einlaufauflage angeordnete Luftdüsen,
- Figur 4: die Anordnung gemäß Figur 1 in perspektivischer Sicht mit hochgeschwenkter Einlaufauflage,
- Figur 5: eine Darstellung einer der Anlage gemäß Figur 1 ähnlichen Anlage mit aus dem Strangverlauf ausschiebbarer Einlaufauflage,
- Figur 6: eine perspektivische Sicht einer Anlage ähnlich derjenigen gemäß Figur 1, allerdings mit in einer Stufe der Einlaufanlage nebeneinander angeordneten Einzeldüsen.

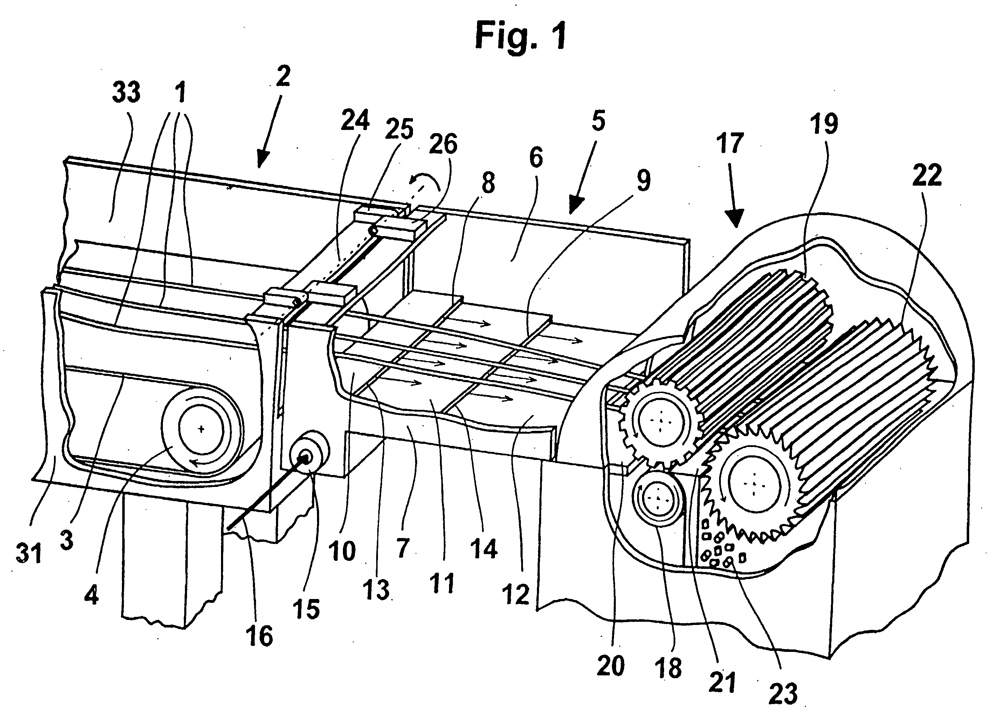

In der Figur 1 ist die Vorrichtung zum Granulieren von schmelzflüssig aus hier nicht dargestellten Düsen austretenden Strängen 1 aus Kunststoff in dem Umfang dargestellt, wie er für das Verständnis der Erfindung erforderlich ist. Gezeigt ist das Ende der auf die ebenfalls nicht dargestellten Kühlstrecke folgenden Entwässerungsstrecke 2, in der die Stränge 1 von dem umlaufenden Förderband 3 getragen und transportiert werden, wobei das Förderband 3 von der angetriebenen Umlenkwalze 4 bewegt wird. Insoweit handelt es sich um Stand der Technik.

An die Entwässerungsstrecke 2 schließt sich die Einlaufauflage 5 an, auf die durch das bewegte Förderband 3 die Stränge 1 geschoben werden. Die Einlaufauflage 5 weist zwischen den beiden Wänden 6 und 7 (letztere ist abgebrochen gezeichnet) die beiden Stufen 8 und 9 auf, denen sich die Auflageflächen 10, 11 und 12 vor- bzw. nachordnen. Dabei reicht die Auflagefläche 10 bis dicht an das Förderband 3 heran, so daß die vom Förderband 3 antransportieren Stränge 1 sicher auf die Auflagefläche 10 geschoben werden. Die Stufe 8 wird zur Bildung der Schlitzdüse 13 ausgenutzt, die sich quer über die Einlaufauflage 5 erstreckt. Entsprechend ist in der Stufe 9 die Schlitzdüse 14 ausgebildet, die sich ebenfalls quer über die Einlaufauflage 5 erstreckt. Diesen Schlitzdüsen wird über den rohrförmigen Luftanschluß 15 unter Druck stehende Luft zugeführt (siehe eingezeichneter Pfeil 16), so daß aus den Schlitzdüsen 13 bzw. 14 ein durch die jeweils vier nebeneinander liegenden kurzen Pfeile angedeuteter Luftstrom austritt, der auf die auf den Auflageflächen 11 und 12 aufliegenden Stränge 1 einwirkt und diese mitreißt, so daß die weitere Förderung der Stränge 1 auch in dem Bereich der Einlaufauflage 5 gewährleistet ist. Diese Wirkung des Luftstromes reicht bis zum Ende der Auflagefläche 12, die in den Eingang des Granulators 17 reicht. Auf diese Weise wird gewährleistet, daß in dem vom Ende des Transportbandes 3 bis zum Eingang des Granulators 17 reichenden Bereich, der von der Einlaufauflage 5 ausgefüllt wird, ein Zug auf die Stränge 1 ausgeübt wird, der zu einer sicheren Führung der Stränge bis in den Granulator 17 führt, so daß es in dem Bereich hinter der Entwässerungstrecke 2, also nachdem die Stränge 1 das Transportband 3 verlassen haben, nicht zu irgendeinem Schlängeln und damit einer Verwirrung der Stränge kommen kann, was dann zu einem unbrauchbarem Granulat führen würde.

Der Granulator 17 enthält, wie dies bekannt ist, die beiden Einzugswalzen 18 und 19, die zwischen sich einen Einzugsspalt offen lassen, in den der Einlauf 20 des Granulators 17 hineinragt. Die von den Einzugswalzen 18 und 19 eingezogenen Stränge gelangen dann auf das Gegenmesser 21, gegen daß der Schneidrotor 22 läuft und die Stränge zu dem Granulat 23 zerschneidet.

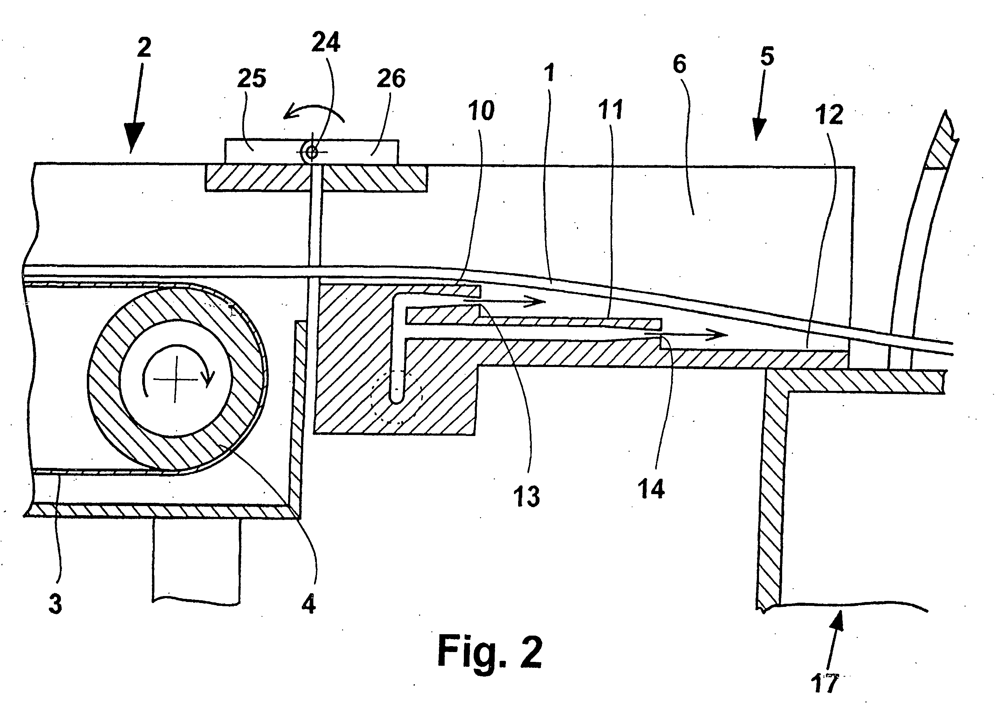

In der Figur 2 ist in prinzipieller Darstellungsweise die Anordnung gemäß Figur 1 im Schnitt dargestellt. Gemäß dieser Schnittdarstellung überbrückt die Einlaufauflage 5 den Bereich zwischen dem Ende der Entwässerungsstrecke 2 und dem Eingang des Granulators 17, womit sich ein gewisser Abstand zwischen dem Granulator 17 und dem Ende der Entwässerungsstrecke 2 ergibt, der durch Abnahme der Einlaufauflage 5 eine leichte Zugänglichkeit des Eingangs des Granulators 17 zur Folge hat, so daß z.B. bei Verschmutzung oder Verklemmung und dergleichen Bedienungspersonal bequem an dem zugänglichen Granulator 17 hantieren kann. Dabei sorgen die Schlitzdüsen 13 und 14 und der aus ihnen austretende Luftstrom dafür, daß im Bereich der Einlaufauflage 5, die man sonst zwecks ungestörter Förderung direkt vom Ende einer Entwässerungsstrecke zu einem Granulator möglichst kurz hält, keinerlei Stauung der geförderten Stränge 1 eintreten kann, die von dem auf sie einwirkenden Luftstrom mitgerissen werden und somit direkt auf den Eingang des Granulators 17 zulaufen, wo sie dann von dem Einzugswalzen 18 und 19 erfaßt werden.

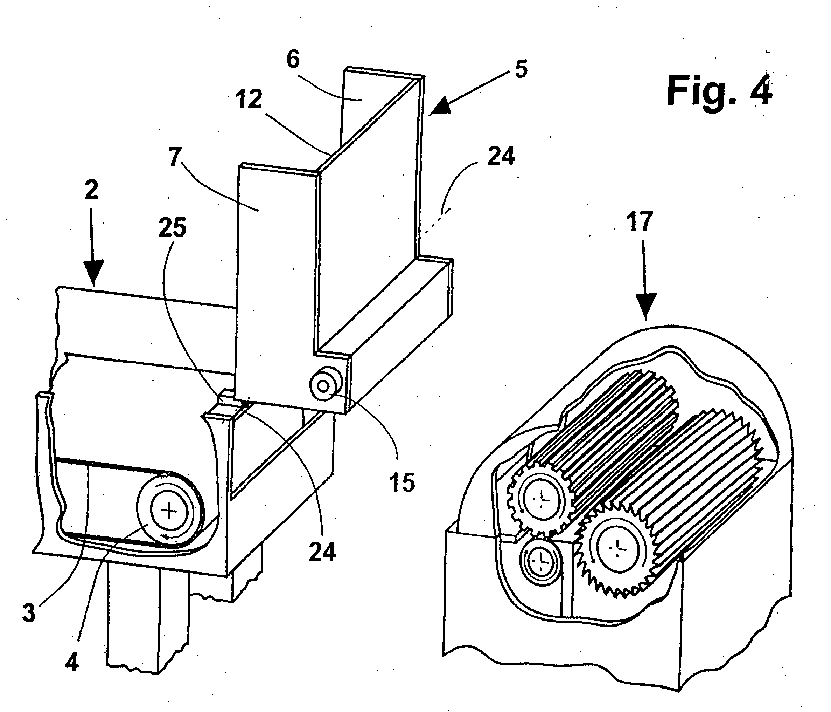

Figur 2 zeigt wie auch Figur 1 eine Scharnieranordnung mit der Achse 24 und den Scharnierarmen 25 und 26, die ein Hochklappen der Einlaufauflage 5 ermöglichen, wie dies in Zusammenhang mit der Figur 4 dargestellt wird.

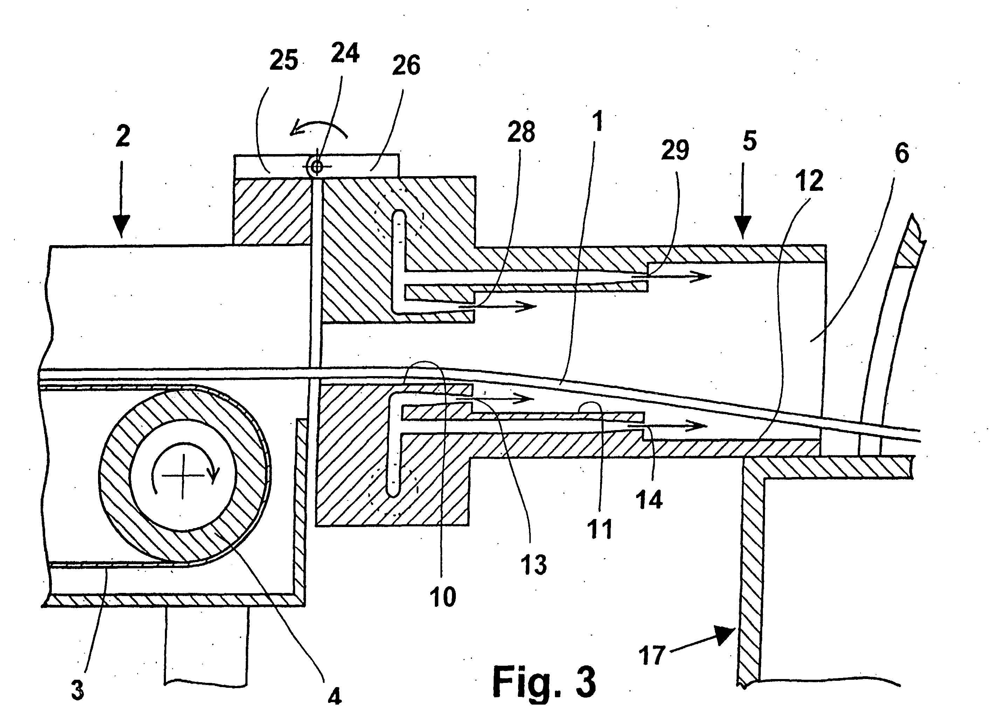

Bei der Anordnung gemäß Figur 3 handelt es sich um eine Abwandlung der Anordnung gemäß Figur 1 und 2, wobei die Abwandlung darin besteht, daß außer den Schlitzdüsen 13 und 14 gemäß Figur 1 und 2 auch noch oberhalb der Stränge 1 die beiden Schlitzdüsen 28 und 29 vorgesehen sind, die, wie die Schlitzdüsen 13 und 14, an eine unter Druck stehende Luftzuleitung angeschlossen sind und einen in Laufrichtung der Stränge 1 gerichteten Luftstrom erzeugen, der auch von oben her auf die Stränge 1 einwirken kann, insbesondere dann, wenn diese die Tendenz aufweisen sollten, sich von den Auflageflächen 10, 11 und 12 abzuheben. Durch diese Schlitzdüsen 28 und 29, die sich wie die Schlitzdüsen 13 und 14 quer über die Einlaufauflage 5 erstrecken, kann also die Einwirkung auf die Stränge 1 intensiviert werden.

In der Figur 4 ist die Anordnung gemäß den Figuren 1 und 2 mit hochgeklappter Einlaufauflage 5 dargestellt, wobei also die Einlaufauflage 5 um die Achse 24 verschwenkt ist. Sie gibt damit den Raum zwischen dem Ausgang der Entwässerungsstrecke 2 und dem Eingang des Granulators 17 weitgehend frei, womit, wie oben dargelegt, der Granulator 17 von seiner Eingangsseite her gut zugänglich wird.

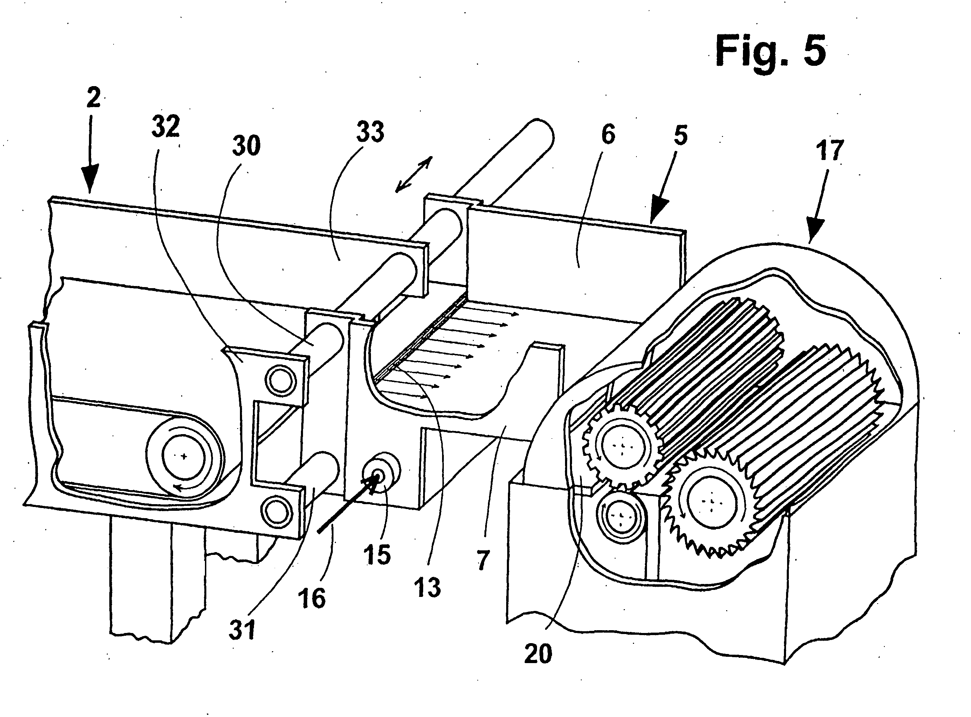

In der Figur 5 ist eine konstruktiv anders gestaltete Bewegung der Einlaufauflage 5 zur Zugänglichmachung des Eingangs des Granulators 17 dargestellt und zwar mittels einer Einrichtung zum Querverschieben der Einlaufauflage 5. Die Einlaufauflage 5 ist hier mit ihren Wänden 6 und 7 auf den Zylindern 30 und 31 gelagert, die an den Wänden 32 und 33 der Entwässerungsstrecke 2 befestigt sind. Bei der quer zur Förderrichtung der hier nicht dargestellten Stränge verlaufenden Verschiebung der Einlaufauflage 5 gleitet diese auf den Zylindern 30 und 31 seitlich weg, was beispielsweise durch Verschieben von Hand oder auch durch irgend einen bekannten Mechanismus geschehen kann. Dabei ergibt sich in Prinzip in gleicher Weise wie aus Figur 4 ersichtlich ein Freiraum vor dem Granulator 17 und gewährleistet damit dessen Zugänglichkeit.

Bei der in der Figur 5 dargestellten Einlaufauflage 5 handelt es sich um eine solche mit nur einer Schlitzdüse 13, die dann ausreicht, wenn der von ihr ausgehende starke Luftstrom genügt, die zugeförderten Stränge über den gesamten Bereich der Einlaufauflage 5 mitzureißen.

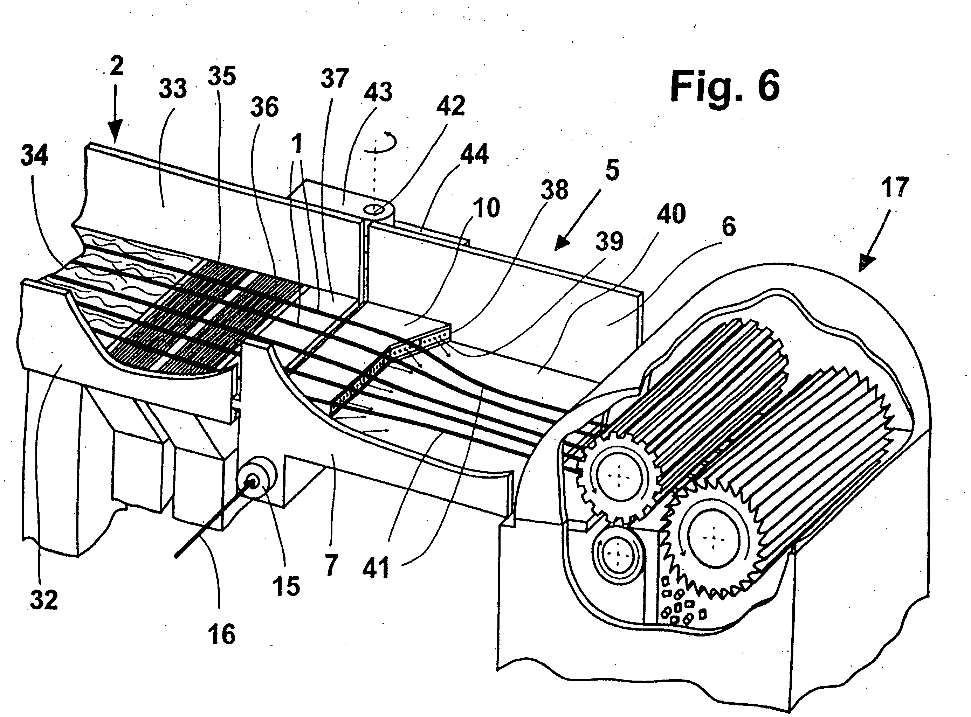

In der Figur 6 ist eine weitere Variante zu der Anordnung gemäß Figur 1 und 2 dargestellt, bei welcher es sich um einen Transport der Stränge 1 im Bereich der Entwässerungsstrecke 2 im wesentlichen durch deren Schräglage, um eine besondere Gestaltung der Düsen für die Luftstrom im Bereich der Einlaufauflage 5 und um eine besondere Art der Wegschwenkbarkeit der Einlaufauflage 5 handelt.

Die über die Entwässerungsstrecke 2 einlaufende Stränge 1 geleiten zunächst mit durch die Schlangenlinien angedeutetes Kühlwasser über den Boden 34 der Entwässerungsstrecke hinweg, gefördert durch das der Schwerkraft folgende Kühlwasser aufgrund einer entsprechender Schräglage der Entwässerungsstrecke 2. Sie gelangen dann auf die beiden Gitterroste 35 und 36, wo ihnen anhaftendes Restwasser abgeblasen bzw. abgesogen wird, wobei es sich um eine bekannte Anordnung handelt. Durch diese Darstellung soll lediglich dargelegt werden, daß man die erfindungsgemäße Einlaufauflage an beliebige vorhergehende Entwässerungsstrecken und dergleichen anschließen kann. Nach Verlassen des Gitterrostes 36 gleiten die Stränge über den Ausgangsboden 37 der Entwässerungsstrecke 2 und gelangen direkt auf die Auflagefläche 10, an die sich die Stufe 38 anschließt. In dieser Stufe 38 ist eine größere Anzahl von nebeneinander angeordneten Einzeldüsen 39 vorgesehen, die einzelne Luftstrahlen auf die Stränge 1 richten. Dabei bildet die Stufe 38 an ihren den Wänden 6 und 7 zugewandten Enden jeweils eine Abknickung in der Weise, daß sich ein auf die Mitte der Auflagefläche 40 gerichteter Gesamtluftstrom ergibt, der zu einem Zusammendrängen der Stränge 41 führt, was zu einer besseren Ausnutzung des Granulators 17 führt. Im Vorlauf vor der dargestellten Anordnung müssen die Stränge wegen ihrer zunächst noch vorhandenen Klebfähigkeit in einem gewissen Abstand voneinander über die Entwässerungsstrecke 2 geführt werden, was aber nach ausreichender Abkühlung im Bereich der Einlaufauflage 5 im allgemeinen nicht mehr notwendig ist, so daß hier durch die dargestellte Ausrichtung der Luftdüsen ein seitliches Zueinanderschieben der Stränge gemäß Position 41 erzielt werden kann. Für das Granulieren dieser zusammengeschobenen Stränge 1 kann dann ein entsprechend schmälerer Granulator verwendet werden. Demgemäß ist es natürlich auch möglich, die Entwässerungsstrecke 2 und die Einlaufauflage 5 zunächst breiter zu gestalten, um dann in einen entsprechend schmäleren Eingang des Granulators 17 zu gelangen.

Für die Wegbewegung der Entwässerungsstrecke 5 ist hier ein Scharnier mit der senkrechten Achse 42 vorgesehen, dessen Scharnierarm 43 an der Wand 33 der Entwässerungsstrecke 2 und dessen Scharnierarm 44 an der Wand 6 der Einlaufauflage 5 befestigt ist. Zur Wegbewegung der Einlaufanlage wird diese um die Achse 42 geschwenkt, wobei natürlich dafür gesorgt werden muß, daß dabei der Auslauf der Einlaufauflage 5 gegenüber dem Granulator 17 einen entsprechenden Bogen frei beschreiben kann, was ggf. durch eine entsprechende Abrundung oder ein geringfügiges Wegschieben des Granulators 17 oder der Entwässerungsstrecke 2 geschehen kann.

## Patentansprüche

1. Vorrichtung zum Granulieren von schmelzflüssig aus Düsen austretenden Strängen (1) aus Kunststoff mit einem Granulator (17), bei der zwischen den Düsen und dem Granulator (17) eine einen Kühlflüssigkeitsstrom führende Kühlstrecke und eine Entwässerungsstrecke (2) vorgesehen ist, **dadurch gekennzeichnet, dass** dem Granulator (17) eine sich an die Entwässerungsstrecke (2) anschließende Einlaufauflage (5) vorgeordnet ist, die mit mindestens einer quer zur Laufrichtung der Stränge (1) angeordneten, als Stufe (8, 9; 38) mit vertikal nach unten gerichtetem Niveauunterschied in der Einlaufauflage (5) ausgebildeten Luftdüsenanordnung (13, 14; 38) zur Erzeugung eines aus der Stufe (8, 9; 38) im Wesentlichen parallel zur Laufrichtung der Stränge (1) austretenden Luftstromes vorgesehen ist, der die der Einlaufauflage (5) zugeführten Stränge (1) mitreißt.

2. Vorrichtung nach Anspruch 1, **dadurch gekennzeichnet, dass** die Luftdüsenanordnung als Schlitzdüse (13, 14) in der Stufe (8, 9) gebildet ist.

3. Vorrichtung nach Anspruch 1, **dadurch gekennzeichnet, dass** die Luftdüsenanordnung aus einer Reihe von in der Stufe (38) nebeneinander angeordneten Einzeldüsen (39) gestaltet ist.

4. Vorrichtung nach Anspruch 3, **dadurch gekennzeichnet, dass** die Einzeldüsen (39) so gerichtet sind, dass der von ihnen ausgehende Luftstrom die Stränge (41) auf der Einlauflage (5) zusammendrängt.

5. Vorrichtung nach einem der vorhergehenden Ansprüche, **dadurch gekennzeichnet, daß** oberhalb der Einlaufauflage (5) weitere in Laufrichtung der Stränge (1) gerichtete Luftdüsen (28,29) vorgesehen sind.

6. Vorrichtung nach einem der vorhergehenden Ansprüche, **dadurch gekennzeichnet, daß** die Einlaufauflage (5) abnehmbar zwischen der Entwässerungsstrecke (2) und dem Granulator (17) angeordnet ist.

7. Vorrichtung nach Anspruch 6, **dadurch gekennzeichnet, daß** die Einlaufauflage (5) ausschwenkbar angeordnet ist (Fig. 1, 6).

8. Vorrichtung nach Anspruch 6, **dadurch gekennzeichnet, daß** die Einlaufauflage (5) aus der Aufeinanderfolge von Entwässerungsstrecke (2) und Granulator (17) ausschiebbar angeordnet ist (Fig. 5).

## Claims

1. An apparatus for pelletizing strands (1) of polymer emerging in molten form from dies with a pelletizer (17), in which apparatus a cooling section carrying a coolant flow and a dewatering section (2) are provided between the dies and the pelletizer (17), **characterized in that** a running-in rest (5) is arranged upstream of the pelletizer (17), adjoining the dewatering section (2) and provided with at least one air-nozzle arrangement (13, 14; 38), which is arranged transversely to the running direction of the strands (1), is designed as a step (8, 9; 38) with a vertical downward difference of level in the running-in rest (5), and is intended for generating a stream of air out of the step (8, 9; 38) directed essentially parallel to the running direction of the strands (1), which takes with it the strands supplied to the running-in rest (5).

2. The apparatus as claimed in claim 1, **characterized in that** the air-nozzle arrangement is formed as a slot nozzle (13, 14) in the step (8, 9).

3. The apparatus as claimed in claim 1, **characterized in that** the air-nozzle arrangement is designed as a row of individual nozzles (39) arranged next to one another in the step (38).

4. The apparatus as claimed in claim 3, **characterized in that** the individual nozzles (39) are directed in such a way that the stream of air emerging from them forces the strands (41) together on the running-in rest (5).

5. The apparatus as claimed in one of the preceding claims, **characterized in that** further air nozzles (28, 29), directed in the running direction of the strands (1), are provided above the running-in rest (5).

6. The apparatus as claimed in one of the preceding claims, **characterized in that** the running-in rest (5) is arranged in such a way that it can be removed from between the dewatering section (2) and the pelletizer (17).

7. The apparatus as claimed in claim 6, **characterized in that** the running-in rest (5) is arranged in such a way that it can be swung out (Fig. 1, 6).

8. The apparatus as claimed in claim 6, **characterized in that** the running-in rest (5) is arranged in such a way that it can be pushed out from the line of the dewatering section (2) followed by the pelletizer (17) (Fig. 5).

## Revendications

1. Appareillage pour granuler des joncs (1) en matière plastique, sortant de buses à l'état fondu, comportant un granulateur (17), appareillage dans lequel il est prévu entre les buses et le granulateur (17) une zone de refroidissement véhiculant un courant de liquide de refroidissement et une zone de déshydratation (2), **caractérisé en ce qu'**en amont du granulateur (17) est disposé un élément d'entrée (5), qui suit la zone de déshydratation (2), élément d'entrée (5) qui est prévu avec au moins un système de buses d'air (13, 14 ; 38), disposé perpendiculairement au sens de passage des joncs (1), et réalisé sous forme d'un étagement (8, 9 ; 38), avec dans l'élément d'entrée (5) une différence de niveau dirigée verticalement vers le bas, et ce, pour produire un courant d'air sortant de l'étagement (8, 9 ; 38) d'une manière essentiellement parallèle au sens de passage des joncs (1), courant d'air qui entraîne avec lui les joncs (1) amenés à l'élément d'entrée (5).

2. Appareillage selon la revendication 1, **caractérisé en ce que** le système de buses d'air est configuré comme une filière plate (13, 14) dans l'étagement (8, 9).

3. Appareillage selon la revendication 1, **caractérisé en ce que** le système de buses d'air est constitué d'une rangée de buses individuelles (39), disposées les unes à côté des autres dans l'étagement (38).

4. Appareillage selon la revendication 3, **caractérisé en ce que** les buses individuelles (39) sont orientées de façon que le courant d'air sortant de ces buses regroupe les joncs (41) sur l'élément d'entrée (5).

5. Appareillage selon l'une des revendications précédentes, **caractérisé en ce qu'**il est prévu au-dessus de l'élément d'entrée (5) d'autres buses d'air (28, 29) dirigées dans le sens de passage des joncs (1).

6. Appareillage selon l'une des revendications précédentes, **caractérisé en ce que** l'élément d'entrée (5) est disposé d'une manière amovible entre la zone de déshydratation (2) et le granulateur (17).

7. Appareillage selon la revendication 6, **caractérisé en ce que** l'élément d'entrée (5) est disposé de façon à pouvoir être enlevé par pivotement (Figures 1, 6).

8. Appareillage selon la revendication 6, **caractérisé en ce que** l'élément d'entrée (5) est disposé de façon à pouvoir être enlevé par poussée de la succession constituée de la zone de déshydratation (2) et du granulateur (17) (Figure 5).
